# NEUE EUROPÄISCHE PATENTSCHRIFT

(11) **EP 2 325 002 B2**
(45) Veröffentlichungstag und Bekanntmachung des Hinweises auf die Entscheidung über den Einspruch: **15.04.2015**
(45) Hinweis auf die Patenterteilung: 29.08.2012
(21) Anmeldenummer: 09176180.9
(22) Anmeldetag: 17.11.2009
(51) Int. Cl.: B32B 17/10

(54) **Verfahren zur Herstellung einer Verbundglasscheibe mit Sensorfenster**
Method for producing a laminated glass pane with sensor window
Procédé de fabrication d'une vitre composite dotée d'une fenêtre de détection

(43) Veröffentlichungstag der Anmeldung: 25.05.2011
(73) Patentinhaber: Saint-Gobain Glass France, 92400 Courbevoie (FR)
(72) Erfinder: Wohlfeil, Dirk, 4730, Raeren (BE); Arslan, Ilkay, 52074, Aachen (DE)
(74) Vertreter: Lendvai, Tomas

(56) Entgegenhaltungen:
- EP-A2- 1 605 729
- WO-A1-00/72635
- WO-A1-01/68395
- WO-A1-2007/039751
- WO-A1-2009/086869
- WO-A2-2004/032569
- DE-A1- 3 708 577
- DE-A1- 10 258 522
- US-A- 5 131 967
- US-A1- 2002 094 407
- US-A1- 2009 039 901
- US-A1- 20060 202 897
- US-B1- 6 356 236

## Beschreibung

Die Erfindung betrifft eine Verbundglasscheibe mit Sensorfenster, ein Verfahren zu deren Herstellung und deren Verwendung.

Viele Fahrzeuge, Flugzeuge, Hubschrauber und Schiffe sind mit verschiedenen optischen Sensoren ausgestattet. Beispiele für optische Sensoren sind Kamerasysteme, wie Videokameras, Nachtsichtkameras, Restlichtverstärker oder passive Infrarotdetektoren, wie FLIR (Forward Looking Infrared). Die Kamerasysteme können Licht im ultravioletten (UV), sichtbaren (VIS) und infraroten Wellenlängenbereich (IR) nutzen. Damit lassen sich Gegenstände, Fahrzeuge, sowie Personen auch bei schlechten Witterungsverhältnissen, wie Dunkelheit und Nebel, präzise erkennen. Diese Kamerasysteme können in Kraftfahrzeugen hinter der Windschutzscheibe im Fahrgastraum platziert werden. Sie bieten damit auch im Straßenverkehr die Möglichkeit, Gefahrensituationen und Hindernisse rechtzeitig zu erkennen.

Weitere Einsatzbereiche für optische Sensoren liegen in der elektronischen Distanzmessung (EDM), beispielsweise mit Hilfe von Laserentfernungsmessern. Hierbei kann die Entfernung zu anderen Fahrzeugen bestimmt werden. Durch Abstandsmessungen zum vorausfahrenden Fahrzeug lässt sich der notwendige Sicherheitsabstand bestimmen und die Verkehrssicherheit deutlich erhöhen. Bei automatischen Warnsystemen verringert sich die Gefahr eines Auffahrunfalls deutlich.

Aufgrund ihrer Empfindlichkeit gegenüber Witterungseinflüssen oder Fahrtwinden müssen derartige Sensoren aber in allen Fällen durch entsprechende Scheiben geschützt werden. Viele moderne Fahrzeuge weisen heutzutage jedoch Scheiben mit speziellen metallischen Beschichtungen auf. Die metallischen Beschichtungen sind in vielen Fällen auf einer PET-Schicht aufgebracht und werden zwischen zwei PVB-Folien, sowie zwei Scheiben laminiert. Die metallischen Beschichtungen können Infrarotstrahlen abweisend sein und verringern somit die Aufheizung des Fahrgastinnenraums, sowie den Treibstoffverbrauch der Klimaanlage. Ein anderer Einsatzbereich metallischer Beschichtungen sind beheizbare Windschutzscheiben. In beheizbaren Windschutzscheiben dienen die metallischen Beschichtungen als elektrischer Heizwiderstand.

Bei beiden Anwendungsmöglichkeiten erschwert die metallische Beschichtung in der Windschutzscheibe die Durchlässigkeit elektromagnetischer Strahlung für hinter der Windschutzscheibe angebrachte Kamera- oder Sensorsysteme. Die Windschutzscheiben müssen daher im Bereich des Sensorfensters entschichtet werden, d.h. die metallische Schicht muss in diesem Bereich entfernt werden. Trennt man aus dem Folienlaminat die betroffene PET-Schicht als Träger der metallischen Schicht heraus, kommt es beim Laminieren zu optische Störungen oder Falten an der Grenzfläche zwischen beschichtetem Folienlaminat und entschichteten Folienlaminat.

DE 10 2007 001 080 A1 offenbart eine elektrisch beheizbare Fensterscheibe. Diese wird mit Hilfe von elektrischen Sammelleitern mit Strom versorgt und dadurch geheizt. Die Anordnung der Leiter erfolgt dabei so, dass sich nur geringe elektromagnetische Felder entwickeln. Damit ist ein Betrieb von Geräten, die empfindlich auf elektromagnetische Felder reagieren, auch im Bereich der Scheibe möglich.

DE 10 2006 054 938 A1 offenbart eine beheizbare Fahrzeugscheibe mit einer Ausparrung für einen Feuchtigkeitssensor. Die Fahrzeugscheibe wird mit Heizelementen beheizt, welche jeweils am Ende elektrisch verbunden sind.

EP 1 605 729 A2 offenbart eine elektrisch beheizbare Scheibe mit einem Kamerafenster. Dieses Kamerafenster wird über eine Heizvorrichtung beschlags- und eisfrei gehalten. Das Heizelement wird an der Position des Kamerafensters in die Scheibe einlaminiert. Zusätzlich kann an der Scheibenoberfläche noch ein zusätzliches Heizelement angebracht werden. Das zusätzliche Heizelement wird bevorzugt als leitfähige Paste auf die Scheibenoberfläche gedruckt.

US 2009/0039901 A1 offenbart ein Fenster mit einem kapazitiven Regensensor. Die Erfindung offenbart wenigstens eine Scheibe, wobei die nicht dem Wetter ausgesetzte Scheibenseite einen Detektor und Elektroden aus einem dünnen leitfähigen Material.

WO 2007/039751 A1 offenbart eine laminierte Verbundglasscheibe. Die Verglasung beinhaltet zwei Scheiben, eine Zwischenschicht und ein elektrisch leitfähige Element, welches ebenfalls in der Zwischenschicht angeordnet ist.

DE 37 08 577 A1 offenbart eine Automobilverglasung mit einer elektrisch leitenden und Wärmestrahlen reflektierenden Schicht. Die Schicht weist eine Transmission von weniger als 20 % und einen Flächenwiderstand von weniger als 2 Ohm pro Quadrateinheit aufweist.

DE 102 58 522 A1 offenbart ein Verfahren zum Markieren einer Verbundglasscheibe mit einer PVB-Folie und einer darauf befindlichen Metallschicht. Nach einer Beaufschlagung mit einem Laserstrahl ändert sich die Farbe der Metallschicht.

Die Aufgabe der Erfindung liegt darin, ein Verfahren zur Herstellung einer Verbundglasscheibe mit Sensorfenster bereitzustellen, das eine einfache Herstellung eines definierten entschichteten Bereichs ermöglicht und keine optischen Auffälligkeiten im Grenzbereich zwischen beschichteten und entschichteten Folienbereich erzeugt.

Die Aufgabe der vorliegenden Erfindung wird erfindungsgemäß durch ein Verfahren zur Herstellung einer Verbundglasscheibe mit mindestens einem Sensorfenster gemäß Anspruch 1 gelöst. Bevorzugte Ausführungen gehen aus den Unteransprüchen hervor.

Das erfindungsgemäße Verfahren zur Herstellung einer Verbundglasscheibe umfasst in einem ersten Schritt das Verbinden einer PVB-Folie und einer metallbeschichteten PET-Folie zu einem Bilayer. In einem zweiten Schritt wird ein entschichteter Bereich auf der metallbeschichteten PET-Folie erzeugt. Dabei wird die metallische Beschichtung größtenteils, bevorzugt zu mehr als 60 Gew. % entfernt und die PET-Folie bevorzugt nur geringfügig abgetragen. Die PET-Folie weist im entschichteten Bereich bevorzugt eine Dicke von > 80 %, besonders bevorzugt mehr als 90 % der vergleichbaren Dicke der PET-Folie mit intakter metallischer Beschichtung auf. Die Herstellung eines Trilayers erfolgt durch Verbinden des Bilayers mit einer weiteren PVB-Folie. Der Trilayer wird anschließend zwischen einer ersten Scheibe und einer zweiten Scheibe zu einer Verbundglasscheibe laminiert. Die erste Scheibe und die zweite Scheibe können sowohl gleich, als auch unterschiedlich beschaffen und dimensioniert sein. Ist die Verbundglasscheibe in einem Fahrzeug, Raum oder Gebäude eingebaut, so bezieht sich bei einer im Fahrzeug eingebauten Scheibe die Bezeichnung erste Scheibe auf die außen befindliche Scheibe und die Bezeichnung zweite Scheibe auf die im Innenraum befindliche Scheibe.

Im Bereich der entschichteten PET-Folie weist die Verbundglasscheibe ein Sensorfenster auf. Der Ausdruck Sensorfenster bezieht sich im Sinne der Erfindung auf einen für elektromagnetische Strahlung durchlässigen Bereich der erfindungsgemäßen Verbundglasscheibe. Da die PET-Folie durch die Entschichtung nur geringfügig verändert wird, treten im Grenzbereich zwischen entschichteter PET-Folie und metallbeschichteter PET-Folie kaum optische Störungen, wie Verzerrungen, Falten oder Wolkenbildung in der Folie auf. Das Sensorfenster hebt sich optisch kaum von der weiteren Verbundglasscheibe ab.

Das Erzeugen des entschichteten Bereichs erfolgt durch Lasern, . Die Metallbeschichtung der PET-Folie wird bevorzugt durch Behandlung mit einem Laser, entfernt.

Das Lasern erfolgt bevorzugt mit einer Wellenlänge von 300 nm bis 1300 nm und/oder einer Leistung von 1 W bis 150 W.

Im entschichteten Bereich werden bevorzugt mindestens 80 Gew. %, bevorzugt mindestens 90 Gew. % der ursprünglichen Metallbeschichtung abgetragen.

Die Erfindung umfasst des Weiteren eine Verbundglasscheibe mit Sensorfenster nach Anspruch 5. Die Verbundglasscheibe umfasst eine obere Scheibe, einen Trilayer aus PVB-Folie, PET-Folie und PVB-Folie, sowie eine untere Scheibe. Ist die Verbundglasscheibe in einem Fahrzeug eingebaut, so bezieht sich die Bezeichnung erste Scheibe auf die im Fahrzeug außen befindliche Scheibe und die Bezeichnung zweite Scheibe auf die im Fahrzeuginnenraum befindliche Scheibe.

Die PET-Folie umfasst eine Metallbeschichtung und einen entschichteten Bereich. Die PET-Folie ist im entschichteten Bereich durchlässig für elektromagnetische Strahlung oder akustische Wellen und bildet in der Verbundglasscheibe ein in den Dimensionierungen des entschichteten Bereichs vorliegendes Sensorfenster. Die Scheiben enthalten bevorzugt Glas und/oder Polymere, bevorzugt Flachglas, Floatglas, Quarzglas, Borosilikatglas, Kalk-Natron-Glas, Polymethylmethacrylat und/oder Gemische davon.

Die Metallbeschichtung weist eine Dicke von 1 nm bis 500 nm, bevorzugt von 50 nm bis 250 nm auf.

Die Metallbeschichtung enthält bevorzugt Silber, Gold, Kupfer, Indium, Zinn, Zink und/oder Legierungen oder Mischungen davon.

Die PET-Folie weist bevorzugt eine Dicke von 30 µm bis 120 µm auf.

Der entschichtete Bereich weist eine Fläche von 20 cm² bis 80 cm² auf. Der entschichtete Bereich nimmt bevorzugt weniger als 15 %, besonders bevorzugt weniger als 5 % der Gesamtfläche der PET-Folie ein.

Der entschichtete Bereich ist bevorzugt auf der ersten Scheibe und/oder zweiten Scheibe von opaken Bereichen umgeben.

Der entschichtete Bereich weist bevorzugt eine mittlere Transmission für elektromagnetische Strahlung der Wellenlänge von 300 nm bis 1300 nm von > 75 %, bevorzugt > 85 % auf.

Die Erfindung umfasst des Weiteren eine nach dem erfindungsgemäßen Verfahren hergestellte Verbundglasscheibe.

Die Erfindung umfasst des Weiteren eine Vorrichtung mit einer erfindungsgemäßen Verbundglasscheibe, einem Sensor und einer Einkapselung. Der Sensor umfasst bevorzugt Kameras, sowie Sensoren zur Abstandsmessung. Die Einkapselung schließt den Sensor zwischen der Scheibe und dem Fahrgastinnenraum ab. Die Einkapselung ist bevorzugt im oberen Bereich der Windschutzscheibe, bevorzugt hinter einem Abdeckstreifen angebracht. Die Einkapselung enthält bevorzugt Trockenmittel, besonders bevorzugt Kieselgel, CaC1₂, Na₂S0₄, Aktivkohle, Silikate, Bentonite und/oder Zeolithe. Die Trockenmittel sind bevorzugt in die Oberfläche der Einkapselung eingearbeitet.

Die Erfindung umfasst des Weiteren die Verwendung der erfindungsgemäßen Verbundglasscheibe für Fahrzeuge, Schiffe, Flugzeuge und Hubschrauber, bevorzugt als Windschutzscheibe und/oder Heckscheibe eines Fahrzeuges.

Im Folgenden wird die Erfindung anhand von Zeichnungen sowie eines Beispiels und Vergleichsbeispiels näher erläutert. Die Zeichnungen sind rein schematische Darstellungen und nicht maßstabsgetreu. Die Zeichnungen schränken die Erfindung in keiner Weise ein.

Es zeigen:
Figur 1 einen Querschnitt einer Verbundglasscheibe mit Sensorfenster nach dem Stand der Technik,
Figur 2 einen Querschnitt einer erfindungsgemäßen Verbundglasscheibe mit Sensorfenster,
Figur 3 eine Draufsicht auf die erfindungsgemäße Verbundglasscheibe und
Figur 4 einen Querschnitt der erfindungsgemäßen Vorrichtung.

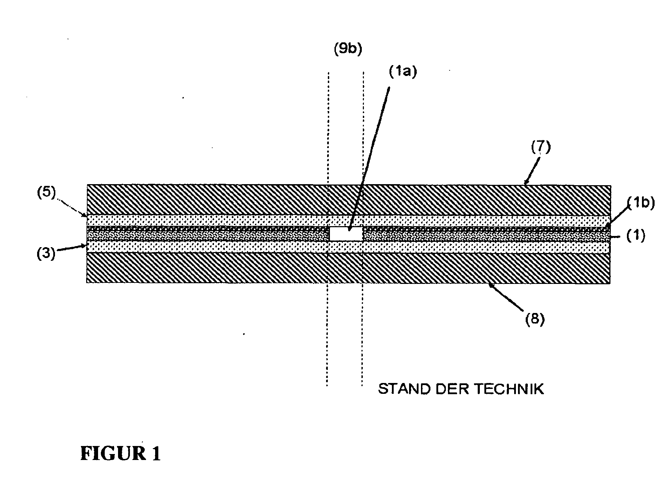

Figur 1 zeigt einen Querschnitt durch eine Verbundglasscheibe mit Sensorfenster nach dem Stand der Technik. Zwischen einer ersten Scheibe (7) und einer zweiten Scheibe (8) ist ein Trilayer aus PVB-Folie (5), PET-Folie (1) und PVB-Folie (3) angeordnet. Die PET-Folie (1) enthält eine metallische Beschichtung (1b) und einen entschichteten Bereich (1a) indem sowohl die metallische Beschichtung (1 b), als auch die PET-Folie (1) entfernt sind. Die gestrichelte Linie (9b) zeigt den Bereich des Sensorfensters nach dem Stand der Technik.

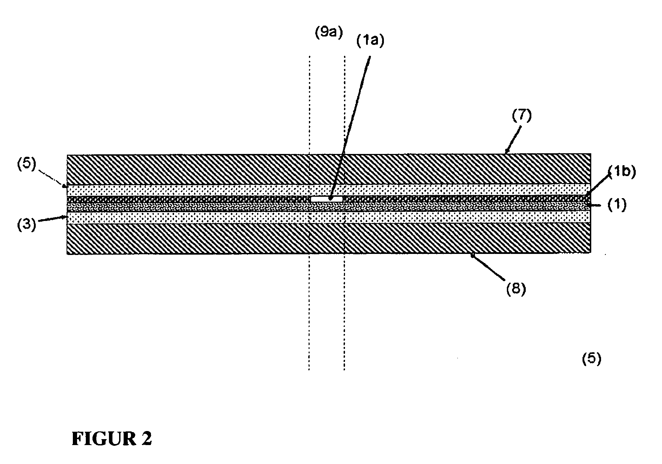

Figur 2 zeigt einen Querschnitt einer erfindungsgemäßen Verbundglasscheibe mit Sensorfenster. Zwischen einer ersten Scheibe (7) und einer zweiten Scheibe (8) ist ein Trilayer aus PVB-Folie (5), PET-Folie (1) und PVB-Folie (3) angeordnet. Die PET-Folie (1) enthält eine metallische Beschichtung (1 b) und einen entschichteten Bereich (1a) auf der PET-Folie (1). Die PET-Folie (1) ist im Gegensatz zum Aufbau in Figur 1 im entschichteten Bereich (1a) nicht abgetragen oder entfernt. Die gestrichelte Linie (9a) zeigt den Bereich des erfindungsgemäßen Sensorfensters.

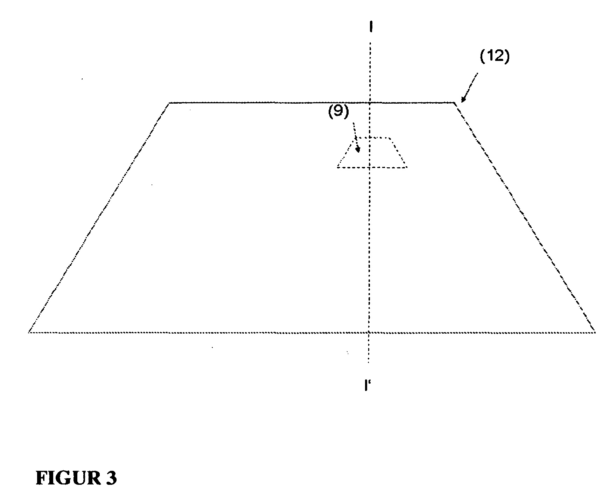

Figur 3 zeigt eine Draufsicht auf die erfindungsgemäße Verbundglasscheibe als Windschutzscheibe (12) mit Sensorfenster (9).

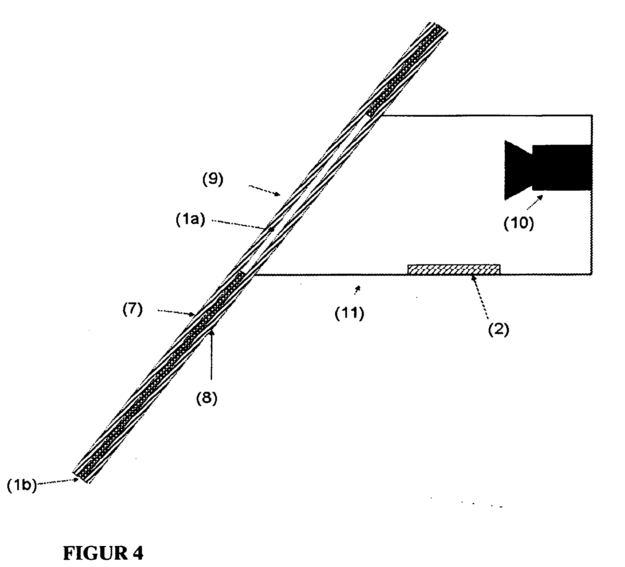

Figur 4 zeigt einen Querschnitt entlang der Scheibenhöhe I nach l'in Figur 3 der erfindungsgemäßen Vorrichtung aus der erfindungsgemäßen Verbundglasscheibe als Windschutzscheibe (12), Sensorfenster (9), Sensor (10) und Einkapselung (11). Zwischen einer ersten Scheibe (7) und einer zweiten Scheibe (8) ist ein nicht gezeigter Trilayer aus PVB-Folie (5), PET-Folie (1) und PVB-Folie (3) einlaminiert. Die nicht gezeigte PET-Folie (1) enthält eine metallische Beschichtung (1b) und einen entschichteten Bereich (1a) auf der PET-Folie (1), welcher das Sensorfenster (9) bildet. Innerhalb der Einkapselung (11) ist bevorzugt ein Trockenmittel (2) angeordnet. Das Trockenmittel (2) ist bevorzugt in die Oberfläche der Einkapselung (11) eingearbeitet.

Im Folgenden wird die Erfindung anhand eines Beispiels und eines Vergleichsbeispiels näher erläutert.

Es wurde eine Windschutzscheibe (12) mit einem nach dem erfindungsgemäßen Verfahren hergestellten Sensorfenster (9a), gemäß Figur 2 und mit einem Sensorfenster (9b) nach dem Stand der Technik gemäß Figur 1 hergestellt.

In einem ersten Schritt wurden eine PVB-Folie (3) und eine metallbeschichtete PET-Folie (1) zu einem Bilayer verbunden. In einem zweiten Schritt wurden zwei entschichtete Bereiche (1a) auf der metallbeschichteten PET-Folie (1) erzeugt. Die metallische Beschichtung (1b) wurde im erfindungsgemäßen Beispiel mit einem IR-Laser der Wellenlänge 1064 nm und einer Leistung von 20 Watt entfernt und das erfindungsgemäße Sensorfenster (9a) erhalten. Das Sensorfenster (9b) nach dem Stand der Technik wurde durch Ausschneiden der metallischen Beschichtung (1 b) und der PET-Folie (1) erhalten. Die Herstellung eines Trilayers aus (1), (3) und (5) erfolgte durch Verbinden des Bilayers aus (3) und (1) mit einer weiteren PVB-Folie (5). Der Trilayer wurde anschließend zwischen einer ersten Scheibe (7) und einer zweiten Scheibe (8) zu einer Verbundglasscheibe laminiert. Das Laminieren erfolgte im Autoklaven für 2,5 h bei 80°C bis 120 °C und 8 bar bis 13 bar.

Die Windschutzscheibenfläche der Windschutzscheibe (12) betrug 1,2 m², beide Scheiben (7) und (8) wiesen eine Dicke von 2,1 mm auf. Die PVB-Folie (5) und die PVB-Folie (3) wiesen eine Dicke von 0,38 mm auf. Die PET-Folie (1) wies eine Dicke von 50 µm auf und war mit Silber und Indiumoxid beschichtet (XIR^{®} - 75, Southwall Europe GmbH, Großröhrsdorf, Deutschland). Das erfindungsgemäße Sensorfenster (9a) und das Sensorfenster (9b) nach dem Stand der Technik wiesen eine Fläche von jeweils 60 cm² auf.

Es wurde die maximale Größe der optischen Verzerrungen als Aufweitung oder Verjüngung eines Streifens im Grenzbereich zwischen den Sensorfenstern (9a) und (9b), sowie dem nicht entschichteten Bereich der Windschutzscheiben bestimmt. Die Aufweitung / Verjüngung wurde über dem schwarzen Streifen gemessen, welcher mit einem Diaprojektor auf einer hellen Leinwand erzeugt wurden. Der Diaprojektor war in einem Abstand von 4 m zu einer im Winkel von 27° zum Lichtstrahl des Diaprojektors aufgestellten Windschutzscheibe (12) angeordnet und erzeugte 4 m hinter der Windschutzscheibe (12) und 8 m vom Projektor entfernt, auf der hellen Leinwand, einen schwarzen Streifen mit einer Breite von 12 mm. Im Grenzbereich der Sensorfenster (9a) und (9b), sowie im Fensterbereich selbst, wurde die maximale Aufweitung / Verjüngung gemessen, bestimmt als maximale Zunahme / Abnahme der Breite des schwarzen Streifens. Die Größe der Aufweitung / Verjüngung findet sich in der folgenden Tabelle 1.

**Tabelle 1: Vergleich der Länge der Aufweitung / Verjüngung des 12 mm breiten Streifens im erfindungsgemäßen Sensorfenster (9a) und im Sensorfenster (9b) nach dem Stand der Technik.**

| | Streifenbreite | | |
|---|---|---|---|
| | Verjüngung | Verbreiterung | Δ |
| Sensorfenster (9a) | 12 mm | 12 mm | 0 mm |
| Sensorfenster (9b) | 7 mm | 18 mm | 11 mm |

Aus Tabelle 1 ist ersichtlich, dass der Betrag Δ der Aufweitung/Verjüngung im Grenzbereich zum erfindungsgemäßen Sensorfenster (9a) nicht messbar und damit deutlich geringer ist, als im Sensorfenster (9b) mit Δ = 11 mm nach dem Stand der Technik. Der Betrag Δ errechnet sich aus der Summe der Abnahme der Verjüngung und der Zunahme der Verbreiterung. Diese Ergebnisse waren überraschend und nicht naheliegend.

### Es zeigen:

- (1): metallbeschichtete PET-Folie,
- (1a): entschichteter Bereich,
- (1b): metallische Beschichtung,
- (2): Trockenmittel,
- (3): PVB-Folie,
- (4): Bilayer,
- (5): PVB-Folie,
- (6): Trilayer,
- (7): erste Scheibe,
- (8): zweite Scheibe,
- (9): Sensorfenster,
- (9a): erfindungsgemäßes Sensorfenster,
- (9b): Sensorfenster nach dem Stand der Technik,
- (10): Sensor,
- (11): Einkapselung,
- (12): Windschutzscheibe und
- (1,1'): Schnitt entlang der Windschutzscheibe.

## Patentansprüche

1. Verfahren zur Herstellung einer Verbundglasscheibe mit mindestens einem Sensorfenster, wobei
a. eine metallbeschichtete PET-Folie (1) über deren von der Metallbeschichtung (1b) abgewandten Seite mit einer PVB-Folie (3) zu einem Bilayer (4) verbunden werden,
b. ein entschichteter Bereich (1a) durch Lasern auf der metallbeschichteten PET-Folie (1), der eine Fläche 20 cm² bis 80 cm² aufweist, erzeugt wird,
c. ein Trilayer (6) durch Verbinden des Bilayers (4) auf der PET-Seite mit einer PVB-Folie (5) erzeugt wird und
d. der Trilayer (6) zwischen einer ersten Scheibe (7) und einer zweiten Scheibe (8) laminiert wird und ein Sensorfenster (9) entsprechend dem entschichteten Bereich (1a) erhalten wird.

2. Verfahren nach Anspruch 1, wobei das Lasern mit einer Wellenlänge von 300 nm bis 1300 nm erfolgt.

3. Verfahren nach einem der Ansprüche 1 oder 2, wobei das Lasern mit einer Leistung von 1 W bis 150 W erfolgt.

4. Verfahren nach einem der Ansprüche 1 bis 3, wobei im entschichteten Bereich (1a) mindestens 80 Gew. %, bevorzugt mindestens 90 Gew. % der ursprünglichen Metallbeschichtung abgetragen werden.

5. Verbundglasscheibe umfassend:
a. eine erste Scheibe (7),
b. eine PVB-Folie (5) auf der ersten Scheibe (7),
c. eine PET-Folie (1), umfassend eine Metallbeschichtung (1b) und einen entschichteten Bereich (1a) der eine Fläche von 20 cm² bis 80 cm² aufweist, auf der PVB-Folie (5), wobei im entschichteten Bereich (1a) mindestens 90 Gew. % der ursprünglichen Metallbeschichtung durch Lasern abgetragen sind,
d. eine PVB-Folie (3) auf der PET-Folie (1),
e. eine zweiten Scheibe (8) auf der PVB-Folie (3) und
f. ein Sensorfenster (9) entsprechend dem entschichteten Bereich (1a).

6. Verbundglasscheibe nach Anspruch 5, wobei die Metallbeschichtung (1b) eine Dicke von 1 nm bis 500 nm, bevorzugt von 50 nm bis 250 nm aufweist.

7. Verbundglasscheibe nach einem der Ansprüche 5 bis 6, wobei die Metallbeschichtung (1b) Silber, Gold, Kupfer, Indium, Zinn, Zink und/oder Legierungen oder Mischungen davon enthält.

8. Verbundglasscheibe nach einem der Ansprüche 5 bis 7, wobei die PET-Folie (1) eine Dicke von 20 µm bis 120 µm aufweist.

9. Verbundglasscheibe nach einem der Ansprüche 5 bis 8, wobei der entschichtete Bereich (1a) auf der ersten Scheibe (7) und/oder zweiten Scheibe (8) von opaken Bereichen (9) umgeben ist.

10. Verbundglasscheibe nach einem der Ansprüche 5 bis 9, wobei der entschichtete Bereich (1a) eine mittlere Transmission für elektromagnetische Strahlung der Wellenlänge von 300 nm bis 1300 nm von > 75 %, bevorzugt > 85 % aufweist.

11. Vorrichtung umfassend eine Verbundglasscheibe nach den Ansprüchen 5 bis 10, einen Sensor (10) in der Position des Sensorfensters (9) und eine Einkapselung (11) für den Sensor.

12. Verwendung der Verbundglasscheibe und/oder Vorrichtung nach einem der Ansprüche 6 bis 11 für Fahrzeuge, Schiffe, Flugzeuge und Hubschrauber, bevorzugt als Windschutzscheibe und/oder Heckscheibe eines Fahrzeuges.

## Claims

1. Method of producing a laminated glass pane with at least one sensor window, wherein
a. a metal-coated PET film (1) is joined via its side facing away from the metal coating (1b) to a PVB film (3) to form a bilayer (4),
b. a stripped region (1a), which has an area of 20 cm² to 80 cm², is created on the metal-coated PET film (1) by lasering
c. a trilayer (6) is created by joining the bilayer (4) on the PET side to a PVB film (5), and
d. the trilayer (6) is laminated between a first pane (7) and a second pane (8), and a sensor window (9) corresponding to the stripped region (1a) is obtained.

2. Method according to claim 1, wherein the lasering is carried out with a wavelength of 300 nm to 1300 nm.

3. Method according to one of claims 1 or 2, wherein the lasering is carried out with power of 1 W to 150 W.

4. Method according to one of claims 1 through 3, wherein, in the stripped region (1a), at least 80 wt.-%, preferably at least 90 wt.-% of the original metal coating is removed.

5. Laminated glass pane comprising:
a. a first pane (7),
b. a PVB film (5) on the first pane (7),
c. a PET film (1), comprising a metal coating (1b) and a stripped region (1a) having an area of 20 cm² to 80 cm², on the PVB film (5), wherein, in the stripped region (1a), at least 90 wt.-% of the original metal coating is removed by lasering,
d. a PVB film (3) on the PET film (1),
e. a second pane (8) on the PVB film (3), and
f. a sensor window (9) corresponding to the stripped region (1a).

6. Laminated glass pane according to claim 5, wherein the metal coating (1b) has a thickness of 1 nm to 500 nm, preferably of 50 nm to 250 nm.

7. Laminated glass pane according to one of claims 5 through 6, wherein the metal coating (Ib) contains silver, gold, copper, indium, tin, zinc, and/or alloys or mixtures thereof.

8. Laminated glass pane according to one of claims 5 through 7, wherein the PET film (1) has a thickness of 20 µm to 120 µm.

9. Laminated glass pane according to one of claims 5 through 8, wherein the stripped region (1a) is surrounded on the first pane (7) and/or second pane (8) by opaque regions (9).

10. Laminated glass pane according to one of claims 5 through 9, wherein the stripped region (1a) has a mean transmission of electromagnetic radiation for wavelengths of 300 nm to 1300 nm of > 75 %, preferably > 85 %.

11. Device comprising a laminated glass pane according to claims 5 to 10, a sensor (10) in the position of the sensor window (9), and an encapsulation (11) for the sensor.

12. Use of the laminated glass pane and/or device according to one of claims 6 through 11 for motor vehicles, ships, airplanes, and helicopters, preferably as a windshield and/or a rear window of a motor vehicle.

## Revendications

1. Procédé de fabrication d'une dalle de verre composite ayant au moins une fenêtre de détection, dans lequel :
a. un film de PET revêtu de métal (1) est lié, par son côté tourné à l'opposé du revêtement métallique (1b), avec un film de PVB (3) pour former une bicouche (4) ;
b. une zone dénudée (1a), d'une surface de 20 cm² à 80 cm², est produite par usinage au laser sur le film de PET revêtu de métal (1) ;
c. une tricouche (6) est formée par liaison de la bicouche (4), sur le côté PET, avec un film de PVB (5) ; et
d. la tricouche (6) est laminée entre une première dalle (7) et une deuxième dalle (8), et une fenêtre de détection (9) correspondant à la zone dénudée (1a) est obtenue.

2. Procédé selon la revendication 1, dans lequel l'usinage au laser s'effectue avec une longueur d'onde de 300 nm à 1300 nm.

3. Procédé selon l'une des revendications 1 et 2, dans lequel l'usinage au laser s'effectue avec une puissance de 1 W à 150 W.

4. Procédé selon l'une des revendications 1 à 3, dans lequel, dans la zone dénudée (1a), au moins 80 % en poids, de préférence au moins 90 % en poids, du revêtement métallique initial ont été enlevés.

5. Dalle de verre composite, comprenant :
a. une première dalle (7) ;
b. un film de PVB (5), placé sur la première dalle (7) ;
c. un film de PET (1) comprenant un revêtement de métal (1b) et une zone dénudée (1a) d'une surface de 20 cm² à 80 cm², placé sur le film de PVB (5), où, dans la zone dénudée (1a) au moins 90% en poids du revêtement de métal initial sont enlevés par laser ;
d. un film de PVB (3), placé sur le film de PET (1) ;
e. une deuxième dalle (8), placée sur le film de PVB (3) ;
et
f. une fenêtre de détection (9) correspondant à la zone dénudée (1a).

6. Dalle composite selon la revendication 5, dans laquelle le revêtement de métal (1b) possède une épaisseur de 1nm à 500 nm, de préférence de 50 nm à 250 nm.

7. Dalle composite selon l'une des revendications 5 et 6, dans laquelle le revêtement de métal (1b) contient de l'argent, de l'or, du cuivre, de l'indium, de l'étain, du zinc et/ou des alliages ou des mélanges de ceux-ci.

8. Dalle composite selon l'une des revendications 5 à 7, dans laquelle le film de PET (1) possède une épaisseur de 20 µm à 120 µm.

9. Dalle composite selon l'une des revendications 5 à 8, dans laquelle la zone dénudée (1a) est entourée sur la première dalle (7) et/ou la deuxième dalle (8) par des zones opaques (9).

10. Dalle composite selon l'une des revendications 5 à 9, dans laquelle la zone dénudée (1a) possède une transmission moyenne supérieure à 75 %, de préférence supérieure à 85 %, pour le rayonnement électromagnétique d'une longueur d'onde de 300 nm à 1300 nm.

11. Dispositif comprenant une dalle composite selon l'une des revendications 5 à 10, un capteur (10) placé dans la position de la fenêtre de détection (9) et une encapsulation (11) pour le capteur.

12. Utilisation de la dalle composite et/ou du dispositif selon l'une des revendications 6 à 11 pour des véhicules automobiles, des navires, des aéronefs et des hélicoptères, de préférence comme pare-brise et/ou comme glace arrière d'un véhicule.
